# EUROPÄISCHE PATENTANMELDUNG

(11) **EP 2 698 233 A1**
(43) Veröffentlichungstag der Anmeldung: **19.02.2014**
(21) Anmeldenummer: 13003939.9
(22) Anmeldetag: 07.08.2013
(51) Int. Cl.: B25J 9/00, B25J 18/04

(54) **Manipulator umfassend einen Mehrachsroboter und eine Hubeinrichtung**

(30) Priorität: 16.08.2012 DE 102012016206
(71) Anmelder: Jochen und Thomas Geschwetner GbR, 88214 Ravensburg (DE)
(72) Erfinder: Jochen und Thomas Geschwetner GbR, 88214 Ravensburg (DE)
(74) Vertreter: Otten, Roth, Dobler & Partner

(57) **Zusammenfassung**

Die Erfindung betrifft einen Manipulator (1), welcher einen Mehrachsroboter (2) und eine Hubeinrichtung (3) umfasst, wobei der Mehrachsroboter (2) von der Hubeinrichtung (3) getragen wird. Hierbei weist die Hubeinrichtung (3) bezüglich einer Positioniergenauigkeit ihrer Tragplatte (5) in einer unteren Endposition (E1) und einer oberen Endposition mindestens die Präzision aufweist, welche für den Mehrachsroboter (2) im Betrieb typisch und gefordert ist.

## Beschreibung

Die Erfindung betrifft einen Manipulator gemäß dem Oberbegriff des Anspruchs 1.

Aus der DE 10 2006 026 132 A1 ist ein Industrieroboter bekannt, welcher von einer Trägereinrichtung unter Zwischenschaltung eines schwimmenden Lagerungssystems getragen wird, wobei das Lagerungssystem Höhenausgleichssysteme umfasst, mittels welchen eine erwünschte Höhenverstellung einer ersten Trägerplatte mit welcher der Industrieroboter starr verbunden ist, erfolgt. Hierbei ist durch das Höhenausgleichssystem ein Wechsel zwischen einer starren Betriebsstellung und einer schwimmenden Betriebsstellung möglich.

Es ist Aufgabe der Erfindung, ein Manipulator vorzuschlagen, welcher durch eine Hubeinrichtung einen Zusatznutzen erfährt.

Diese Aufgabe wird ausgehend von den Merkmalen des Oberbegriffs des Anspruchs 1 durch die kennzeichnenden Merkmale des Anspruchs 1 gelöst. In den Unteransprüchen sind vorteilhafte und zweckmäßige Weiterbildungen angegeben.

Bei dem erfindungsgemäßen Manipulator, welcher einen Mehrachsroboter und eine den Mehrachsroboter tragende Hubeinrichtung umfasst, weist die Hubeinrichtung bezüglich einer Positioniergenauigkeit ihrer Tragplatte in einer unteren Endposition und in einer oberen Endposition mindestens die Präzision auf, welche für den Mehrachsroboter im Betrieb typisch und gefordert ist, wobei der Mehrachsroboter und die Hubeinrichtung elektronisch derart gemeinsam gesteuert bzw. geregelt sind und zwischen der Tragplatte der Hubeinrichtung und einem Sockel der Hubeinrichtung angeordnete Führungsmittel und Antriebsmittel der Hubeinrichtung die Tragplatte mit dem darauf angeordneten Mehrachsroboter derart genau an dem Sockel führen, dass von dem Mehrachsroboter eine Arbeitsaktion wie insbesondere Greifen oder Absetzten oder Schrauben oder Nieten oder Schweißen in einer für den Mehrachsroboter typischen Positionsgenauigkeit bzw, Bahntreue ausführbar ist, wenn die Tragplatte der Hubeinrichtung in der unteren Endposition oder in der oberen Endposition steht. Hierdurch ist der Mehrachsroboter des Manipulators sowohl in der unteren Endposition als auch in der oberen Endposition als vollwertiger Mehrachsroboter verwendbar, so dass ein Aktionsradius des Mehrachsroboters, in welchem dieser mit der für ihn typischen Präzision und Geschwindigkeit arbeitet vergrößert wird.

Weiterhin ist es vorgesehen, die Hubeinrichtung bezüglich einer Positioniergenauigkeit bzw. Bahntreue ihrer Tragplatte auch in allen Positionen zwischen der unteren Endposition und der oberen Endposition so auszubilden, dass diese mindestens die Präzision aufweist, welche für den Mehrachsroboter im Betrieb typisch und erforderlich ist, wobei der Mehrachsroboter und die Hubeinrichtung elektronisch derart gemeinsam gesteuert bzw. geregelt sind und die zwischen der Tragplatt der Hubeinrichtung und einem Sockel der Hubeinrichtung angeordnete Führungsmittel und Antriebsmittel der Hubeinrichtung die Tragplatte mit dem darauf angeordneten Mehrachsroboter derart genau an dem Sockel führen, dass von dem Mehrachsroboter auch dann eine Arbeitsaktion wie insbesondere Greifen oder Absetzten oder Schrauben oder Nieten oder Schweißen in einer für den Mehrachsroboter typischen Positionsgenauigkeit bzw. Bahntreue ausführbar ist, wenn die Hubeinrichtung in einer Zwischenposition zwischen der unteren Endposition und der oberen Endposition steht und/oder während die Hubeinrichtung zwischen der unteren Endposition und der oberen Endposition verfahren wird. Hierdurch ist es möglich, beim Anfahren verschiedener Positionen auch die Hubeinrichtung als Antrieb zu verwenden und so Verfahrbewegungen mit einer Komponente in z-Richtung dadurch zu beschleunigen, dass zusätzlich zu einem oder mehreren Antrieben des Mehrachsroboters auch die Antriebsmittel der Hubeinrichtung aktiv sind. Weiterhin kann auch dadurch Verfahrzeit eingespart werden, dass die Tragplatte den Mehrachsroboter nur um das erforderliche Maß anhebt.

Es ist auch vorgesehen, die Hubeinrichtung mit wenigstens drei Führungsmittel auszustatten, wobei ein Führungsmittel insbesondere eine Führungsleiste und einen Laufwagen umfasst. Hierdurch kann die Tragplatte besonders spielarm an dem Sockel geführt werden.

Weiterhin ist es vorgesehen, die Hubeinrichtung mit wenigstens drei Antriebsmitteln auszustatten, wobei ein Antriebsmittel insbesondere einen Spindelantrieb umfasst. Durch die Verteilung der erforderlichen Antriebsleistung auf mehrere Antriebsmittel können die einzelnen Antriebsmittel baulich klein und kompakt gehalten werden. Weiterhin stehen beim Ausfall eines Antriebsmittels noch zwei Antriebsmittel für einen Notbetrieb zur Verfügung.

Schließlich ist es vorgesehen, den Manipulator mit einer Verfahreinrichtung und insbesondere einer Linearverfahreinrichtung auszustatten, auf welcher die Hubeinrichtung verfahrbar ist. Hierdurch wird ein Aktionsbereich des Manipulators noch weiter vergrößert.

Weitere Einzelheiten der Erfindung werden in der Zeichnung anhand von schematisch dargestellten Ausführungsbeispielen beschrieben.

Hierbei zeigt:
- Figur 1:: eine Seitenansicht eines erfindungsgemäßen Manipulators, bei welchem eine Hubeinrichtung in der unteren Endposition steht;
- Figur 2:: eine Seitenansicht des in der Figur 1 gezeigten Manipulators, wobei die Hubeinrichtung in der oberen Endposition steht;
- Figur 3:: einen Schnitt durch die Hubeinrichtung des in den Figuren 1 und 2 gezeigten Manipulators entsprechend der in der Figur 1 gezeigten Schnittlinie III-III und
- Figur 4:: eine schematische Darstellung einer Verfahreinrichtung, auf welcher eine Hubeinrichtung in zwei unterschiedlichen Verfahrstellungen gezeigt ist.

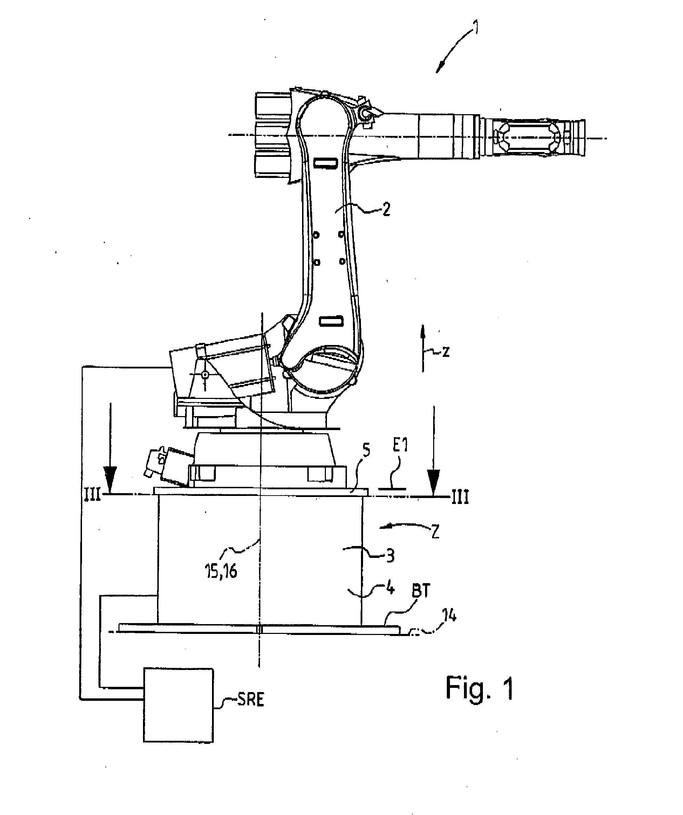

In der Figur 1 ist eine Seitenansicht eines erfindungsgemäßen Manipulators 1 gezeigt. Der Manipulator 1 umfasst einen handelsüblichen Mehrachsroboter 2, welcher auch als Industrieroboter bezeichnet wird, und eine Hubeinrichtung 3. Die Hubeinrichtung 3 umfasst einen Sockel 4 und eine Tragplatte 5, wobei der Mehrachsroboter 2 von der Hubeinrichtung 3 getragen wird und auf der Tragplatte 5 befestigt ist. Der Mehrachsroboter 2 ist als 6-Achsroboter ausgeführt. In der Figur 1 ist die Hubeinrichtung 3 bzw. deren Tragplatte 5 in einer unteren Endstellung E1 stehend dargestellt.

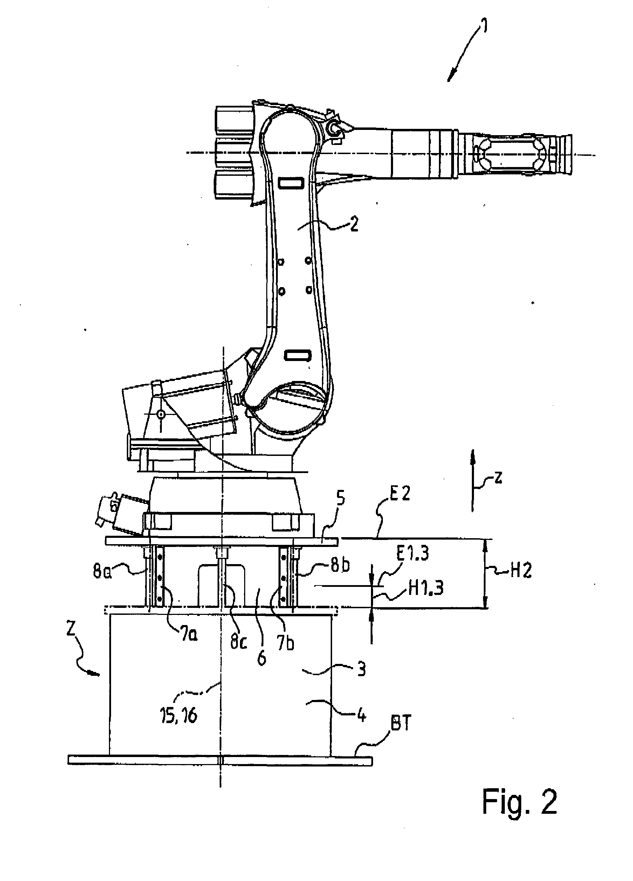

Aus dieser unteren Endstellung E1 ist die Hubeinrichtung 3 bzw. deren Tragplatte 5 in eine Pfeilrichtung z in eine in der Figur 2 dargestellte obere Endstellung E2 verfahrbar. Bei diesem Hubvorgang wird der Mehrachsroboter 2 von der Tragplatte 5 beispielsweise um eine Hubhöhe H2 von 35 cm angehoben, so dass der Mehrachsroboter 2 nunmehr um bis zu 35 cm höher liegende Punkte anfahren kann, als ihm dies aus der Endstellung E1 der Hubeinrichtung 3 heraus möglich ist. In der Darstellung der Figur 2 ist erkennbar, dass die Tragplatte 5 von einer Hubsäule 6 getragen wird, wobei an der Hubsäule 6 zwei Führungsleisten 7a, 7b sichtbar sind. Weiterhin sind seitlich vor der Hubsäule 6 drei Hubspindeln 8a, 8b und 8c erkennbar, welche die Tragplatte 5 anheben. Die Hubeinheit 3 weist oberhalb eines Bodentellers BT die Form eines Zylinders Z auf und ist somit optimal an die Bauform des Mehrachsroboters 2 angepasst.

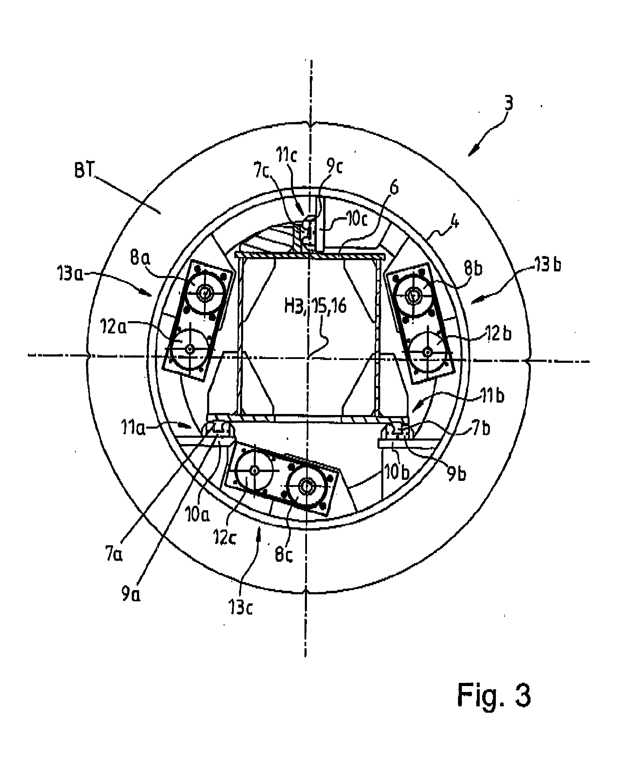

In einer in der Figur 3 dargestellten Schnittansicht, welche eine Schnitt entsprechend der in der Figur 1 eingezeichneten Schnittlinie III-III zeigt, ist zunächst die geschnittene Hubsäule 6 erkennbar, an welcher außer den Führungsleisten 7a und 7b noch eine Führungsleiste 7c fixiert ist. Die Führungsleisten 7a bis 7c bilden zusammen mit Laufwägen 9a bis 9c, welche ortsfest an Laschen 10a - 10c des Sockels 4 angeordnet sind, drei Führungsmittel 11a - 11c der Hubeinrichtung 3. Weiterhin sind die konzentrisch zu einer in z-Richtung verlaufenden Hochachse H3 der Hubeinrichtung 3 angeordneten Hubspindeln 8a, 8b und 8c erkennbar. Zusammen mit Motoren 12a - 12c bilden diese als Spindelantriebe jeweils wesentliche Bestandteile von Antriebsmitteln 13a - 13c der Hubeinrichtung 3.

Es ist auch vorgesehen, wie in der Figur 2 abgedeutet, die Tragplatte 5 aus der unteren Endposition E1 heraus in Zwischenpositionen anzuheben und den Mehrachsroboter 2 aus dieser Stellung heraus zu betreiben, wobei eine Zwischenposition E1.3 exemplarisch dargestellt ist, in welcher die Tragplatte um eine Höhe H1.3 angehoben ist.

Weiterhin ist es vorgesehen, den Mehrachsroboter 2 zu betreiben während die Hubeinrichtung 3 zum Beispiel aus der Zwischenposition E1.3 in die obere Endposition E2 verfahren wird.

Die Hubeinrichtung 3 ist mit einem Untergrund 14 (siehe Figur 1) fest verbunden. Eine Hubachse 15 der Hubeinrichtung 3, auf welcher die Tragplatte 5 angehoben wird, bildet eine siebte Achse 16 des Manipulators 1.

Ausschließlich in der Figur 1 ist noch eine Steuer- und Regeleinheit SRE dargestellt, welche mit dem Mehrachsroboter 2 und mit der Hubeinrichtung 3 verbunden ist und diese derart steuert und regelt, dass diese wie ein n + 1 - Achs-Manipulator betrieben werden, wobei "n" für die Zahl der Achsen des Mehrachsroboters 2 stehet und "+ 1" für die Achse der Hubeinrichtung 3 steht. Hierbei ist es vorgesehen die Steuer- und Regeleinheit SRE insbesondere durch Umprogrammierung und/oder hardwaretechnische Ergänzung einer vorhandenen Steuer- und Regeleinheit des Mehrachsroboters 2 zu bilden.

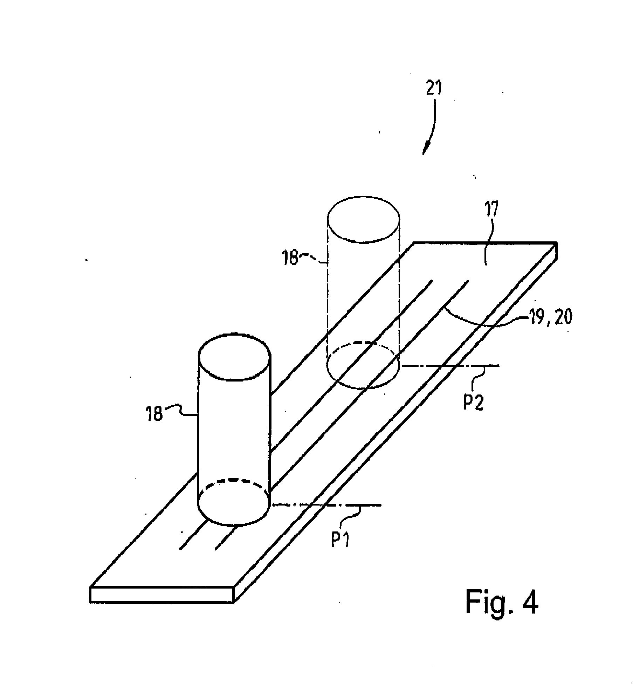

In der Figur 4 ist in schematischer Darstellung eine Verfahreinrichtung 17 gezeigt, auf welcher eine symbolisch dargestellte Hubeinrichtung 18 für einen nicht dargestellten Mehrachsroboter aus einer mit durchgezogenen Linien dargestellten ersten Position P1 in eine mit gestrichelten Linien dargestellte zweite Position P2 verfahrbar ist. Die Verfahreinrichtung 17 ist als Linearverfahreinrichtung ausgebildet und bildet mit ihrer Verfahrachse 19 eine achte Achse 20 eines in der Figur 4 nur unvollständig dargestellten Manipulators 21.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche.

### Bezugszeichenliste:

- 1: Manipulator
- 2: Mehrachsroboter
- 3: Hubeinrichtung
- 4: Sockel
- 5: Tragplatte
- 6: Hubsäule
- 7a - 7c: Führungsleiste
- 8a - 8c: Hubspindel
- 9a - 9c: Laufwagen
- 10a - 10c: Lasche
- 11a - 11c: Führungsmittel
- 12a - 12c: Motor
- 13a - 13c: Antriebsmittel von 3
- 14: Untergrund
- 15: Hubachse von 3
- 16: siebte Achse von 1.
- 17: Verfahreinrichtung
- 18: Hubeinrichtung
- 19: Verfahrachse 19
- 20: achte Achse von 21
- 21: Manipulator

- BT: Bodenteller von 3
- E1: unteren Endstellung von 3 bzw. 5
- E1.3: Zwischenposition von 3 bzw. 5
- E2: obere Endstellung von 3 bzw. 5
- H1.3: Höhe von E1.3
- H2: Hubhöhe von E1 auf E2
- H3: Hochachse von 3
- P1: ersten Position von 18
- P2: zweite Position von 18
- SRE: Steuer- und Regeleinheit
- z: Richtung
- Z: Zylinder

## Patentansprüche

1. Manipulator (1; 21) umfassend einen Mehrachsroboter (2) und eine Hubeinrichtung (3; 18), wobei der Mehrachsroboter (2) von der Hubeinrichtung (3) getragen wird, **dadurch gekennzeichnet,**
- **dass** die Hubeinrichtung (3; 18) bezüglich einer Positioniergenauigkeit ihrer Tragplatte (5) in einer unteren Endposition (E1) und einer oberen Endposition (E2) mindestens die Präzision aufweist, welche für den Mehrachsroboter (2) im Betrieb typisch und gefordert ist,
- wobei der Mehrachsroboter (2) und die Hubeinrichtung (3; 18) elektronisch derart gemeinsam gesteuert bzw. geregelt sind und zwischen der Tragplatte (5) der Hubeinrichtung (3; 18) und einem Sockel (4) der Hubeinrichtung (3; 18) angeordnete Führungsmittel (11a - 11c) und Antriebsmittel (13a - 13c) der Hubeinrichtung (3; 18) die Tragplatte (5) mit dem darauf angeordneten Mehrachsroboter (2) derart genau an dem Sockel (4) führen, dass von dem Mehrachsroboter (2) eine Arbeitsaktion wie insbesondere Greifen oder Absetzten oder Schrauben oder Nieten oder Schweißen in einer für den Mehrachsroboter (2) typischen Positionsgenauigkeit bzw. Bahntreue ausführbar ist, wenn die Tragplatte (5) der Hubeinrichtung (3; 18) in der unteren Endposition (E1) oder in der oberen Endposition (E2) steht.

2. Manipulator nach Anspruch 1, **dadurch gekennzeichnet,**
- **dass** die Hubeinrichtung (3; 18) bezüglich einer Positioniergenauigkeit bzw. Bahntreue ihrer Tragplatte (5) auch in allen Positionen zwischen der unteren Endposition (E1) und der oberen Endposition (E2) mindestens die Präzision aufweist, welche für den Mehrachsroboter (2) im Betrieb typisch und erforderlich ist,
- wobei der Mehrachsroboter (2) und die Hubeinrichtung (3; 18) elektronisch derart gemeinsam gesteuert bzw. geregelt sind und die zwischen der Tragplatt (5) der Hubeinrichtung (3; 18) und einem Sockel (4) der Hubeinrichtung (3; 18) angeordneten Führungsmittel (11a - 11c) und Antriebsmittel (13a - 13c) der Hubeinrichtung (3; 18) die Tragplatte (5) mit dem darauf angeordneten Mehrachsroboter (2) derart genau an dem Sockel (4) führen, dass von dem Mehrachsroboter (2) auch dann eine Arbeitsaktion wie insbesondere Greifen oder Absetzten oder Schrauben oder Nieten oder Schweißen in einer für den Mehrachsroboter (2) typischen Positionsgenauigkeit bzw. Bahntreue ausführbar ist,
- wenn die Hubeinrichtung (3; 18) in einer zwischenposition (E1.3) zwischen der unteren Endposition (E1) und der oberen Endposition (E2) steht und/oder
- während die Hubeinrichtung (3; 18) zwischen der unteren Endposition (E1) und der oberen Endposition (E2) verfahren wird.

3. Manipulator nach einem der vorhergehenden Ansprüche, **dadurch gekennzeichnet, dass** die Hubeinrichtung (3; 18) wenigstens drei Führungsmittel (11a - 11c) umfasst, wobei ein Führungsmittel (11a - 11c) insbesondere eine Führungsleiste (7a - 7c) und einen Laufwagen (9a - 9c) umfasst.

4. Manipulator nach einem der vorhergehenden Ansprüche, **dadurch gekennzeichnet, dass** die Hubeinrichtung (3; 18) wenigstens drei Antriebsmittel (13a - 13c) umfasst, wobei ein Antriebsmittel (13a - 13c) insbesondere einen Spindelantrieb (8a - 8c, 12a - 12c) umfasst.

5. Manipulator nach einem der vorhergehenden Ansprüche, **dadurch gekennzeichnet, dass** der Manipulator (1; 21) eine Verfahreinrichtung (17) und insbesondere eine Linearverfahreinrichtung umfasst, auf welcher die Hubeinrichtung (3; 18) verfahrbar ist.
